(19) Europäisches Patentamt
European Patent Office
Office européen des brevets

(11) **EP 4 668 210 A1**

(12) **EUROPEAN PATENT APPLICATION**
published in accordance with Art. 153(4) EPC

(43) Date of publication:
**24.12.2025 Bulletin 2025/52**

(21) Application number: **25753766.2**

(22) Date of filing: **03.01.2025**

(51) International Patent Classification (IPC):
**G06T 7/246** (2017.01)

(86) International application number:
**PCT/CN2025/070336**

(87) International publication number:
**WO 2025/227822 (06.11.2025 Gazette 2025/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.04.2024 CN 202410523992**

(71) Applicant: **Shenzhen Shengqiang Technology Co., Ltd.**
**Shenzhen, Guangdong 518000 (CN)**

(72) Inventors:
• **WANG, Zihan**
**Shenzhen**
**Guangdong 518000 (CN)**

• **HE, Ning**
**Shenzhen**
**Guangdong 518000 (CN)**
• **HUANG, Qiang**
**Shenzhen**
**Guangdong 518000 (CN)**
• **KUANG, Guotao**
**Shenzhen**
**Guangdong 518000 (CN)**
• **JIN, Jie**
**Shenzhen**
**Guangdong 518000 (CN)**

(74) Representative: **Izquierdo Blanco, Maria Alicia**
**Acopat ID**
**General Salazar, 10**
**48012 Bilbao (ES)**

(54) **LIVE CELL IMAGE CAPTURE FOCUS TRACKING AND IMAGE MATCHING METHOD, AND USE THEREOF**

(57) The present disclosure provides a method for focus tracking and image matching in live cell imaging and an application thereof. The method includes moving three XYZ axes to an observation point accurately, moving upward and downward and recording multi-stage positions and images, and determining an optimal focal plane of the Z axis through Gaussian blur and a Laplacian algorithm; and calculating a translation relationship between the images for calibration and compensation through a phase correlation algorithm in combination with Fourier transform and affine transformation in X and Y axes positioning. In addition, a fault tolerance mechanism is included. When focusing or matching fails, multiple attempts are made and verification is performed through the phase correlation algorithm, to cope with hardware anomalies or environmental changes, such that imaging accuracy is ensured. A set step size is in a range of 5 to 10 minimum step sizes. The method can improve the accuracy and stability of live cell observation.

FIG. 1

**Description**

**BACKGROUND OF THE PRESENT INVENTION**

**Field of Invention**

The present disclosure relates to the field, particularly to a method for focus tracking and image matching in live cell imaging and an application thereof.

**Description of Related Arts**

In biomedical research and experiments, especially in precise cytobiology experiments, it is crucial to observe behaviors and life cycle changes of live cells in real time and continuously. Existing live cell observation systems generally use high-precision three-dimensional mechanical motion platforms, such as live cell observation instruments, to capture cell images at different observation points through coordinated control of a camera via three XYZ axes. However, during long-term running, cameras of such systems may fail to be accurately reset to preset observation points due to limitations of hardware mechanical accuracy or accumulated errors over time. This significantly affects the quality of cell images and the validity of data.

Specifically, the prior art faces two key problems. Firstly, due to dynamic characteristics of live cells such as growth, division, sedimentation, and floating as well as instability or error accumulation of the instrument's Z-axis driving system, the camera's focal plane may deviate from an optimal position, thus affecting sharpness of the captured images and making it difficult to accurately identify cellular structural details. Secondly, after XYZ axes are positioned at a target observation point, although initial focusing is performed, there may still be a field-of-view shift along X and Y axes, leading to a lack of effective spatial correspondence between sequentially captured images obtained at the same observation point.

Thus, a core technical problem to be solved by the present disclosure is to develop a method for focus tracking and image matching in live cell imaging, so as to implement focus compensation under high-precision three-dimensional motion and position correction of X and Y axes based on image analysis. This method effectively overcomes motion errors caused by insufficient hardware precision or aging, and ensures that a camera can always maintain accurate alignment with a growth focus of live cells all the time and achieve accurate matching with an image previously taken at a same position. In this way, stable and sharp cell imaging is provided, which is conducive to in-depth research of behaviors and physiological processes of cells.

**SUMMARY OF THE PRESENT INVENTION**

Examples of the present disclosure provide a method for focus tracking and image matching in live cell imaging and an application thereof, so as to solve problems of focus tracking, image matching, and other aspects in the prior art.

A core technology of the present disclosure is mainly to improve focus tracking and image matching separately, so as to solve problems such as accuracy deviation in repetitive motion to an observation point due to force majeure factors of mechanical axis motion of a live cell observation instrument. By performing motion calibration and compensation, an accuracy error after compensation remains within a minimum step size of an electric motor (the minimum step size refers to minimum displacement or a minimum angle change achievable by the electric motor).

In a first aspect, the present disclosure provides a method for focus tracking and image matching in live cell imaging. The method includes following steps:

S00, moving three XYZ axes of a live cell observation instrument to a selected cell observation point; and at a current position of the Z axis, first moving the Z axis upward by a set step size and then downward by a set step size or first moving the Z axis downward by a set step size and then upward by a set step size, and recording a specific position of and a corresponding image at the Z axis after each moving step size, where

each moving step size is one minimum step size representing minimum displacement or a minimum angle change achievable by an electric motor;

S10, performing Gaussian blur processing on each image, and calculating sharpness through a Laplacian algorithm;

S20, using an image having the highest sharpness as a target point, and moving the Z axis of the live cell observation instrument to the target point, where the target point corresponds to a focal plane having the highest sharpness on the Z axis;

S30, collecting a current field-of-view image and an image previously taken at the current observation point; and

S40, calculating a translation relationship between the two images through a phase correlation algorithm, so as to perform motion calibration and compensation on the X and Y axes of the live cell observation instrument.

Further, in S10, the Gaussian blur processing includes following specific steps:

S11, constructing a Gaussian kernel through a discrete form of a two-dimensional Gaussian function; and

S12, applying the Gaussian kernel to each pixel of the image, and achieving a blurring effect of the image through a weighted mean method, so as to reduce noise and make the image smoother.

Further, in S10, the calculating sharpness through a Laplacian algorithm includes following specific steps:

S13, performing second-order differential operations on the Gaussian-blurred image through a discrete form of a Laplacian operator, so as to highlight an edge and a texture in the image; and

S14, calculating a score of the image through a mean value formula to evaluate the sharpness of the image.

Further, in S30, a Fourier transform function is used to calculate the phase correlation translation relationship between the two images along the X and Y axes.
Further, in S30, following the calculation with the Fourier transform function, the images undergo calculation through affine transformation for image registration and translation, obtaining deviation values of the X and Y axes, through which motion calibration and compensation are performed on the X and Y axes.
Further, the method further includes fault tolerance processing steps:

saving, when a sharp focus fails to be obtained or image matching fails at the selected observation point, an image of the observation point separately as a first error backup;

resetting the three XYZ axes of the live cell observation instrument to return to their initial state;

re-executing S00 to S40;

saving, when a sharp focus still fails to be obtained or image matching fails again, an image of the current observation point separately as a second error backup;

calculating the translation relationship between the two images of the first error backup and the second error backup for matching through the phase correlation algorithm; and

determining, if the two images are consistent, that there is an external physical change, and using the second error backup as the current field-of-view image in S30; and determining, if the two images are inconsistent, that hardware is abnormal, and stopping imaging.

Further, in S00, the set step size is in a range of 5 to 10 minimum step sizes.
In a second aspect, the present disclosure provides an apparatus for focus tracking and image matching in live cell imaging. The apparatus includes:

a control module, configured to move three XYZ axes of a live cell observation instrument to a selected cell observation point; and at a current position of the Z axis, first move the Z axis upward by a set step size and then downward by a set step size or first move the Z axis downward by a set step size and then upward by a set step size, and record a specific position of and a corresponding image at the Z axis after each moving step size, where each moving step size is one minimum step size representing minimum displacement or a minimum angle change achievable by an electric motor;

a focusing module, configured to perform Gaussian blur processing on each image, and calculate sharpness through a Laplacian algorithm; and use an image having the highest sharpness as a target point, and move the Z axis of the live cell observation instrument to the target point, where the target point corresponds to a focal plane having the highest sharpness on the Z axis;

a matching module, configured to collect a current field-of-view image and an image previously taken at the current observation point; and calculate a translation relationship between the two images through a phase correlation algorithm, so as to perform motion calibration and compensation on the X and Y axes of the live cell observation instrument; and

a fault tolerance processing module, configured to save, when a sharp focus fails to be obtained or image matching fails at the selected observation point, an image of the observation point separately as a first error backup; reset the three XYZ axes of the live cell observation instrument to return to their initial state; re-execute the operations of the control module, the focusing module, and the matching module; save, when a sharp focus still fails to be obtained or image matching fails again, an image of the current observation point separately as a second error backup; calculate the translation relationship between the two images of the first error backup and the second error backup for matching through the phase correlation algorithm; determine, if the two images are consistent, that there is an external physical change, and use the second error backup as the current field-of-view image of the matching module; and determine, if the two images are inconsistent, that hardware is abnormal, and stop imaging.

In a third aspect, the present disclosure provides an electronic apparatus. The electronic apparatus includes a memory and a processor. The memory stores a computer program. The processor is configured to run the computer program to execute the method for focus tracking and image matching in live cell imaging.

In a fourth aspect, the present disclosure provides a readable storage medium. The readable storage medium stores a computer program. The computer program includes a program code used to control a process to execute the process. The process includes the method for focus tracking and image matching in live cell imaging.

Main contributions and innovations of the present disclosure are as follows: 1. Compared with the prior art, the present disclosure, through the processing of focus tracking and image matching, solves problems such as accuracy deviation in repetitive motion to the observation point due to force majeure factors of mechanical axis motion of the live cell observation instrument. By performing motion calibration, and compensation, an accuracy error after compensation remains within the minimum step size of the electric motor, thereby ensuring the accuracy of instrument motion, where the minimum step size refers to the minimum displacement or the minimum angle change achievable by the electric motor, and electric motors produced by different manufacturers may use different technologies and designs, resulting in different minimum step size accuracies being adjusted according to parameters of the selected electric motor.

2. Compared with the prior art, the present disclosure provides a brand-new method for focus tracking and image matching in live cell imaging, which effectively solves problems of inaccurate focusing and difficult image matching caused by hardware precision limitations and accumulated errors of the live cell observation instrument in the prior art. Microstep moving is performed on the Z axis, and images are obtained at different positions. Image sharpness is calculated through the Gaussian blur processing and the Laplacian algorithm, such that the focal plane having the highest sharpness is identified for live cells, and accurate identification of cellular structural details is ensured.

3. Compared with the prior art, the present disclosure makes a breakthrough in focus tracking technology, designs a unique focus search strategy, and accurately identifies the focal plane having the highest sharpness by performing bidirectional fine adjustment on the Z axis while recording corresponding positions and images. This significantly improves the adaptability and focus accuracy of the camera in response to dynamic changes (such as growth, division, sedimentation, and floating) of the live cells. The position calibration and compensation are performed on the X and Y axes through the phase correlation algorithm in combination with the Fourier transform and the affine transformation, such that images at the same observation point across multiple captures can be accurately matched, spatial correspondence consistency is ensured, and data reliability of continuous live-cell observation is enhanced.

4. Compared with the prior art, the present disclosure further innovatively integrates a fault tolerance processing mechanism. When focusing or image matching fails, multiple attempts can be made and backup images can be saved for secondary verification. Thus, hardware faults and external environment changes are effectively distinguished, and the stability and robustness of the entire system are improved.

5. Compared with the prior art, the present disclosure not only provides a new methodological flow, but also integrates the method into an apparatus for focus tracking and image matching in live cell imaging, and an electronic apparatus. Thus, a leap is achieved from a theoretical method to a practical application, which is conducive to advancements in the microscopic imaging technology of the live cells in biomedical research.

Details of one or more examples of the present disclosure are given in the following drawings and description to make other features, objectives and advantages of the present disclosure clearer and more comprehensible.

## BRIEF DESCRIPTION OF THE DRAWINGS

The accompanying drawings, used to provide further understanding of the present disclosure, constitute part of the present disclosure, and illustrative examples of the present disclosure and their description serve to explain the present disclosure and are not to be construed as unduly limiting the present disclosure. In the drawings:

FIG. 1 shows a flowchart of a method for focus tracking and image matching in live cell imaging according to an example of the present disclosure; and

FIG. 2 shows a schematic diagram of a hardware structure of an electronic apparatus according to an example of the present disclosure.

## DETAILED DESCRIPTION OF THE PREFERRED EMBODIMENT

Illustrative examples will be described in detail herein and shown in the accompanying drawings illustratively. When the following description involves the accompanying drawings, unless otherwise specified, an identical numeral in different accompanying drawings denotes identical or similar elements. Embodiments described in the following illustrative examples do not denote all embodiments consistent with one or more examples of the description. On the contrary, the embodiments are merely instances of an apparatus and a method consistent with some aspects of one or more examples of the description as detailed in the appended claims.

It should be noted that, in other examples, steps of the corresponding method may not necessarily be executed in an order shown and described in the description. In some other examples, the method may include more or fewer steps than those described in the description. In addition, a single step described in the description may be decomposed into a plurality of steps for description in other examples. The plurality of steps described in the description may be combined into a single step in other examples.

Example 1

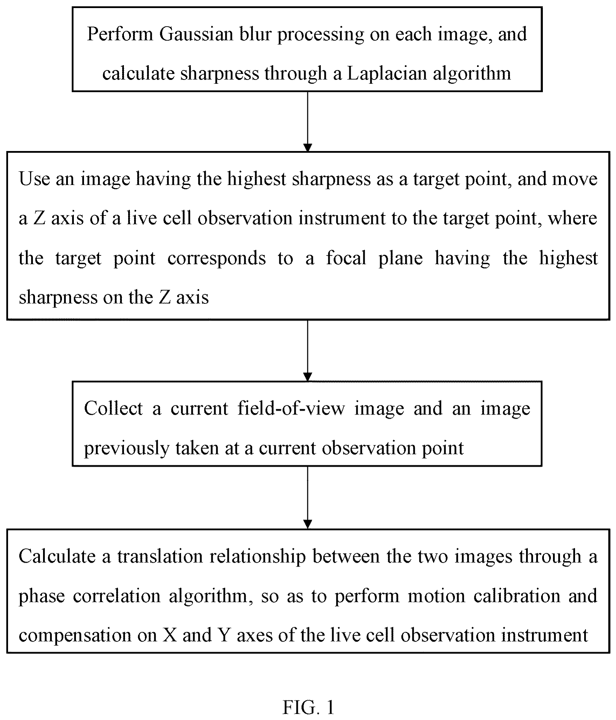

The present disclosure aims to provide a method for focus tracking and image matching in live cell imaging. Specifically, with reference to FIG. 1, the method includes following steps:

Step 1, focus tracking:

(a) Three XYZ axes of a live cell observation instrument are mechanically moved to a selected cell observation point. At a current position of the Z axis, an electric motor moves downward by 10 minimum step sizes, and then moves upward by 10 minimum step sizes. A specific position after each moving step size is recorded, where the minimum step size refers to the minimum displacement or the minimum angle change achievable by the electric motor, and electric motors produced by different manufacturers may use different technologies and designs, resulting in different in minimum step size accuracies being adjusted according to parameters of the selected electric motor. A total of 20 images are collected, with one image taken at each step-size position.

(b) Gaussian blur processing is performed on each image, and a score is calculated through a Laplacian algorithm.

(1) Firstly, a Gaussian kernel is constructed through a discrete form of a two-dimensional Gaussian function. Then, the Gaussian kernel is applied to each pixel of the image, and a blurring effect of the image is achieved through a weighted mean method, so as to reduce noise and make the image smoother. The mathematical expression is as follows:

$$\left[ G(x, y) = \frac{1}{2\pi\sigma^2} e^{-(x^2+y^2)/(2\sigma^2)} \right],$$

where

G(x, y) denotes the discrete form of the two-dimensional Gaussian function, i.e., a weight value at each pixel position (x, y) on the image, which is used for the weighted mean method to achieve the blurring effect;

$\sigma$ denotes a standard deviation of the Gaussian function, which controls a distribution range of the Gaussian kernel; the greater the standard deviation, the wider a weight distribution, and the more significant the blurring effect; and a greater standard deviation may cause pixels from a wider range to be taken into account to produce a more significant blurring effect;

x and y denote pixel offsets in horizontal and perpendicular directions, respectively, and the sum of squares of x and y determines the values of the Gaussian function at different positions, thus affecting pixel weights at corresponding positions; and

e denotes a base number of a natural logarithm, a constant approximately equal to 2.71828.

(2) Then, second-order differential operations are performed on the Gaussian-blurred image through a discrete form of a Laplacian operator, so as to highlight an edge and a texture in the image. This is conducive to improvement in sharpness and contrast of the image. The mathematical expression is as follows:

$$\left[\nabla^2 f = \frac{\partial^2 f}{\partial x^2} + \frac{\partial^2 f}{\partial y^2}\right],$$

where

$\nabla^2 f$ denotes a Laplacian operator of an image f, i.e., a second-order differential result, and is used to highlight the edge and the texture in the image;

(x, y) denotes a pixel value at a position (x, y) in the image; and

$(\partial)$ denotes a partial derivative.

(3) Finally, the score of the image subjected to Laplacian edge detection is calculated through a mean value formula to evaluate the sharpness of the image. The mathematical expression is as follows:

$$\left[\frac{1}{n}\sum_{i=1}^{n} x_i\right],$$

where

$x_i$ denotes a gray value of an i-th pixel in the image;

$\sum_{i=1}^{n}$ denotes the sum of gray values of all pixels in the image; and

n denotes a total number of all pixel points in the image.

(c) Ultimately, once the scores of 20 images are calculated, an image having the highest score is identified, and a position record of the image is determined. Then, the Z axis is moved to the position, which corresponds to a sharpest focal plane on the Z axis.

Step 2, image matching:
After the step of focus tracking is completed, a current field-of-view image and an image previously taken at the observation point are collected. Then, a translation relationship between the two images is calculated through a phase correlation algorithm, so as to perform motion calibration and compensation on the X and Y axes.

(a) A Fourier transform function is used to calculate the phase correlation translation relationship between the two images along the X and Y axes. The mathematical expression is as follows:

$$\left[R = \frac{F_{hat} \cdot G^*_{hat}}{|F_{hat}| \cdot |G_{hat}|}\right],$$

where

R denotes a correlation between the two images, and is used to identify an offset between the images;

$F_{hat}$ and $G^*_{hat}$ denote Fourier transformations of the two input images, respectively;

$|F_{hat}|$ and $|G_{hat}|$ denote magnitude spectra of $|F_{hat}|$ and $|G_{hat}|$, respectively, and are used for normalization; and

hat denotes a variable in a frequency domain.

(b) Following the calculation with the Fourier transform function, the images undergo image registration and translation through a calculation formula of affine transformation, obtaining deviation values of the X and Y axes. The mathematical expression is as follows:

$$\left[\begin{bmatrix} x' \\ y' \end{bmatrix} = \begin{bmatrix} a & b \\ c & d \end{bmatrix} \begin{bmatrix} x \\ y \end{bmatrix} + \begin{bmatrix} tx \\ ty \end{bmatrix}\right],$$

where

x' denotes a new X-axis coordinate after affine transformation; y' denotes a new Y-axis coordinate after affine transformation; x denotes an X-axis coordinate of a point in an original image; y denotes a Y-axis coordinate of a point in the original image; a, b, c, d, tx and ty denote parameters of affine transformation; a and d control stretching transformation in horizontal and perpendicular directions; b and c control shear transformation; and tx and ty control translation transformation.

(c) The deviation values of the X and Y axes of the two images are obtained and then recorded, and the electric motor is controlled to perform displacement by the deviation values of the X and Y axes, so as to implement motion calibration and compensation.

Or, the above steps are repeated multiple times until the calculated deviation values of the X and Y axes are within an allowable error range (generally less than the minimum displacement or the minimum angle change of the electric motor). Through this process, basic consistency is achieved in a field-of-view range each time.

Step 3, fault tolerance processing:
When an abnormal situation occurs, and a sharp focus fails to be obtained or image matching fails at the selected observation point, following steps are performed:

(a) an image of the point is saved separately as a backup, which is named as "Error 1";

(b) XYZ-axis motors are moved and reset to their initial state;

(c) then, the motors are moved to the selected observation point again for focus tracking and image matching; and

(d) if a sharp focus and successful image matching are achieved, the process returns to the normal flow. That is, if a sharp focus can be obtained normally and image matching is accomplished, the currently collected image is determined as normal and is saved, and the backup image named "Error 1" is deleted.
The fault tolerance processing terminates, and then image collection of a next observation point is performed.

(e) If a sharp focus still fails to be obtained or image matching fails again, an image of the point is saved separately as a backup, which is named as "Error 2".

(f) Then, backup images of "Error 1" and "Error 2" are subjected to the image matching in step 2:

(1) If the images are basically consistent, it is determined that an external physical change exists at the current observation point (for instance, motion of a live cell culture dish or replacement of different kinds of cells by the laboratory personnel). Meanwhile, the successfully taken image of "Error 2" is saved (as the current field-of-view image in the image matching in step 2), and the process returns to the normal flow.

(2) If the images are inconsistent, it is determined that three different results are obtained through three captures. Hardware abnormality may exist, and imaging needs to be stopped.

The Gaussian blur processing is an image processing technology. The Gaussian blur processing is to create a filter or a convolution kernel based on a Gaussian function (a normal distribution function) and perform convolution operation on an image, so as to implement blur processing on the image. The Gaussian blur processing is mainly used to reduce details of an image, reduce noise interference, simulate a depth-of-field effect, or produce a soft visual effect. After processing, edges of the image become blurred and detail information is reduced, presenting a visually uniform and smooth effect. The advantage of Gaussian blur processing lies in its adherence to the principle of light diffusion in nature, and the degree of blur follows a normal distribution, with the greatest influence in the central zone and a gradual decrease in influence as the distance from the center point increases, resulting in a natural transition.

Preferably, the following methods may be used as alternatives to the Gaussian blur processing:

1. Anisotropic diffusion/edge-preserving blur: This method can perform nonuniform blur processing according to the content of an image, giving priority to preserving edges and structural details of the image. Thus, it is more suitable for cases where smoothing is required while maintaining a clear contour of an object.

2. Guided filtering: It can perform local smoothing according to the direction and intensity of a guiding image (generally the original image or a version with highfrequency information). This method can not only reduce noise but also keep edges sharp.

3. Convolutional neural network (CNN): By training a convolutional neural network model tailored for a specific task, more intelligent image denoising and smoothing can be implemented. This method can generally remove noise while keeping details. For instance, a super-resolution reconstruction technology based on deep learning can improve image sharpness while suppressing noise.

4. Bilateral filtering: This method considers color similarity and a spatial distance between pixels while blurring an image. It can effectively reduce noise and preserve edges, and is especially suitable for cases where keeping image edges sharp is required.

As an image processing technology, Laplacian edge detection is mainly used to detect a position where a gray level changes sharply in an image, i.e., a potential edge position. As a second-order differential operator, the Laplacian operator can quantify a second derivative of an image gray change, thus revealing a sharp change in the image, i.e., edge information. After the Gaussian blur processing is performed on the image, the Laplacian operator can highlight edge and texture features in the image, which are further used to determine which positions correspond to the sharpest focal planes. Main effects of the Laplacian edge detection are to quantitatively describe sudden changes of gray gradients of an image and help locate the boundary parts of light and shade in the image, i.e., edge positions. When the Laplacian edge detection is used for the focus tracking in live cell imaging, an optimal focal plane can be determined by calculating image sharpness (i.e., edge richness).

Preferably, the following methods may be used as alternatives to the Laplacian edge detection:

1. Canny edge detection: A Canny operator combines Gaussian filtering, gradient calculation, non-maximum suppression, double-threshold detection and many other steps, which can provide an optimal edge detection effect, and has characteristics of a low false detection rate and a high detection rate.

2. Roberts/Laplacian of Gaussian (LoG) or Sobel operator: The two operators are classical edge detection methods. Compared with a pure Laplacian operator, the operators calculate a gradient direction and magnitude through a first derivative, and can distinguish an edge direction and intensity more accurately by combining a suitable directional filter.

3. Machine learning and deep learning methods: In recent years, with the rapid development of edge detection algorithms based on a convolutional neural network (CNN), methods such as holistically-nested edge detection (HED) and DeepEdge can learn complex edge patterns from global and multi-scale information of images. These can not only detect edges that can be hardly captured by traditional methods, but also provide higher detection accuracy in complex backgrounds.

The phase correlation algorithm is a technology widely used in the field of image registration and matching. Its basic principle is to determine relative displacement between two images by comparing phase information of the two images in a frequency domain based on Fourier transform characteristics of images. In the above content, the phase correlation algorithm is used to calculate a translation relationship between two live cell images along the X and Y axes for motion calibration and compensation of the live cell observation instrument, and ensure the precise alignment of continuously captured images. Main effects of the phase correlation algorithm include:

High-precision positioning: Because phase information is highly sensitive to minor changes in image content, even in a case of certain changes in the image content or noise, slight translation and rotation between images can be calculated accurately.

Robustness: Compared with direct correlation matching in an image space domain, the phase correlation algorithm is more robust to factors such as illumination changes and image scaling.

Faster speed: Combined with the fast Fourier transform (FFT) technology, the phase correlation algorithm has an obvious advantage in calculation efficiency, and is more suitable for real-time processing and registration of large amounts of image data.

Preferably, in a case of a significant difference in image content, severe occlusion, or non-rigid deformation, the following methods can be used to replace the phase correlation algorithm:

1. Feature-based methods: Techniques such as scale-invariant feature transform (SIFT), speeded up robust features (SURF), and oriented fast and rotated binary robust independent elementary features (ORB) are adept at extracting key feature points of images for matching, and are suitable for large-scale image transformation and view transformation.

2. Machine learning and deep learning methods: With the development of artificial intelligence technology, image registration algorithms based on deep learning have begun to emerge. They can learn a complex transformation relationship between images and improve registration accuracy through end-to-end training.

Example 2

Based on an identical concept, the present disclosure further provides an apparatus for focus tracking and image matching in live cell imaging. The apparatus includes:

a control module, configured to move three XYZ axes of a live cell observation instrument to a selected cell observation point; and at a current position of the Z axis, first move the Z axis upward by a set step size and then downward by a set step size or first move the Z axis downward by a set step size and then upward by a set step size, and record a specific position of and a corresponding image at the Z axis after each moving step size, where each moving step size is one minimum step size representing minimum displacement or a minimum angle change achievable by an electric motor;

a focusing module, configured to perform Gaussian blur processing on each image, and calculate sharpness through a Laplacian algorithm; and use an image having the highest sharpness as a target point, and move the Z axis of the live cell observation instrument to the target point, where the target point corresponds to a focal plane having the highest sharpness on the Z axis;

a matching module, configured to collect a current field-of-view image and an image previously taken at the current observation point; and calculate a translation relationship between the two images through a phase correlation algorithm, so as to perform motion calibration and compensation on the X and Y axes of the live cell observation instrument; and

a fault tolerance processing module, configured to save, when a sharp focus fails to be obtained or image matching fails at the selected observation point, an image of the observation point separately as a first error backup; reset the three XYZ axes of the live cell observation instrument to return to their initial state; re-execute the operations of the control module, the focusing module, and the matching module; save, when a sharp focus still fails to be obtained or image matching fails again, an image of the current observation point separately as a second error backup; calculate the translation relationship between the two images of the first error backup and the second error backup for matching through the phase correlation algorithm; determine, if the two images are consistent, that there is an external physical change, and use the second error backup as the current field-of-view image of the matching module; and determine, if the two images are inconsistent, that hardware is abnormal, and stop imaging.

Example 3

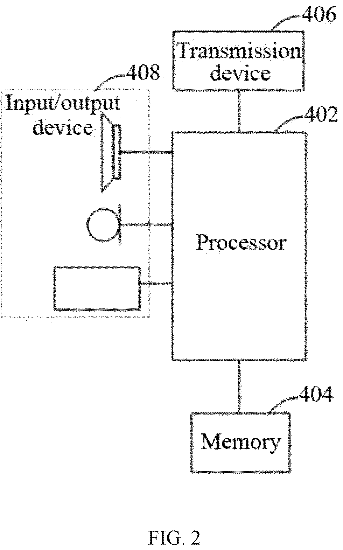

This example further provides an electronic apparatus. With reference to FIG. 2, the electronic apparatus includes a memory 404 and a processor 402. The memory 404 stores a computer program. The processor 402 is configured to run the computer program to execute steps of any one of the method examples.

Specifically, the processor 402 may include a central processing unit (CPU), an application specific integrated circuit (ASIC), or one or more integrated circuits configured to implement the examples of the present disclosure.

The memory 404 may include a mass memory 404 configured for data or instructions. For illustration rather than limitation, the memory 404 may include a hard disk drive (HDD), a floppy disk drive, a solid state drive (SSD), a flash memory, an optical disk, a magneto-optical disk, a magnetic tape, a universal serial bus (USB) drive, or a combination of two or more of the above. Where appropriate, the memory 404 may include a removable or non-removable (or fixed) medium. Where appropriate, the memory 404 may be arranged inside or outside an apparatus for data processing. In a particular example, the memory 404 is a non-volatile memory. In a particular example, the memory 404 includes a read-only memory (ROM) and a random access memory (RAM). Where appropriate, the ROM may be a mask-programmed ROM, a programmable read-only memory (PROM), an erasable programmable read-only memory (EPROM), an electrically erasable programmable read-only memory (EEPROM), an electrically alterable read-only memory (EAROM), a flash memory, or a combination of two or more of the above. Where appropriate, the RAM may be a static random-access memory (SRAM) or a dynamic random access memory (DRAM). The DRAM may be a fast page mode dynamic random access memory 404 (FPMDRAM), an extended data out dynamic random access memory (EDO DRAM), a synchronous dynamic random-access memory (SDRAM), etc.

The memory 404 may be configured to store or cache various data files for processing and/or communication, and possible computer program instructions executed by the processor 402.

The processor 402 reads and executes the computer program instructions stored in the memory 404 to implement any method for focus tracking and image matching in live cell imaging in the above examples.

Optionally, the electronic apparatus may further include a transmission device 406 and an input/output device 408. The transmission device 406 is connected to the processor 402. The input/output device 408 is connected to the processor 402.

The transmission device 406 may be configured to receive or transmit data through one network. Specific instances of the network may include a wired or wireless network provided by a communication provider of the electronic apparatus. In one instance, the transmission device includes one network interface controller (NIC), which may be connected to other network devices through a base station so as to be in communication with the Internet. In one instance, the transmission device 406 may be a radio frequency (RF) module configured to be in wireless communication with the Internet.

The input/output device 408 is configured to input or output information.

Example 4

This example further provides a readable storage medium. The readable storage medium stores a computer program. The computer program includes a program code used to control a process to execute the process. The process includes the method for focus tracking and image matching in live cell imaging according to Example 1.

It should be noted that reference may be made to instances described in the above examples and optional embodiments for specific instances in this example, which will not be repeated in this example.

Generally, various examples may be implemented in hardware or exclusive circuits, software, logics, or any combination thereof. Some aspects of the present disclosure may be implemented by hardware, while other aspects may be implemented by firmware or software executed by a controller, microprocessor or other computing devices, which do not limit the present disclosure. Although various aspects of the present disclosure may be shown and described as block diagrams, flowcharts, or some other figure forms, it should be understood that, as non-limitative instances, blocks, apparatuses, systems, technologies or methods described herein may be implemented as hardware, software, firmware, exclusive circuits or logics, general-purpose hardware, controllers, other computing devices, or some combination thereof.

The examples of the present disclosure may be implemented by computer software. The computer software is executable by a data processor of a mobile device, and for instance, in a processor entity, by hardware, or by a combination of software and hardware. Computer software or programs (also referred to as program products) including software routines, applets and/or macros may be stored in any apparatus-readable data storage mediums, and they include program instructions used to perform specific tasks. A computer program product may include one or more computer-executable components configured to perform the examples when a program runs. One or more computer-executable components may be at least one software code or part thereof. In addition, at this point, it should be noted that any block of a logic flow in the figure may represent a program step, an interconnected logic circuit, block and function, or a combination of a program step with a logic circuit, a block and a function. Software may be stored on physical mediums such as a memory chip or a memory block implemented in a processor, magnetic mediums such as a hard disk or a floppy disk, and optical mediums such as a digital video disc (DVD) and its data variants, and a compact disc (CD). The physical mediums are non-transient mediums.

Those skilled in the art should understand that all technical features of the examples may be arbitrarily combined. To simplify description, all possible combinations of all the technical features of the examples are not described. However, if only the combinations of these technical features do not conflict, they should be considered to be within the scope of the description.

The examples are merely several embodiments of the present disclosure, are specifically described in detail, and cannot be interpreted as limiting the scope of the present disclosure as a result. It should be noted that those of ordinary skill in the art may make multiple modifications and improvements on the premise of not deviating from the concept of the present disclosure, and these modifications and improvements fall within the protection scope of the present disclosure. Thus, the protection scope of the present disclosure should be subject to the appended claims.

**Claims**

1. A method for focus tracking and image matching in live cell imaging, comprising following steps:

    S00, moving three XYZ axes of a live cell observation instrument to a selected cell observation point; and at a current position of the Z axis, first moving the Z axis upward by a set step size and then downward by a set step size or first moving the Z axis downward by a set step size and then upward by a set step size, and recording a specific position of and a corresponding image at the Z axis after each moving step size, wherein each moving step size is one minimum step size representing minimum displacement or a minimum angle change achievable by an electric motor;

    S10, performing Gaussian blur processing on each image, and calculating sharpness through a Laplacian algorithm;

    S20, using an image having the highest sharpness as a target point, and moving the Z axis of the live cell observation instrument to the target point, wherein the target point corresponds to a focal plane having the highest sharpness on the Z axis;

    S30, collecting a current field-of-view image and an image previously taken at the current observation point; and

    S40, calculating a translation relationship between the two images through a phase correlation algorithm, so as to perform motion calibration and compensation on the X and Y axes of the live cell observation instrument.

2. The method for focus tracking and image matching in live cell imaging according to claim 1, wherein in S10, the Gaussian blur processing comprises following specific steps:

    S11, constructing a Gaussian kernel through a discrete form of a two-dimensional Gaussian function; and

    S12, applying the Gaussian kernel to each pixel of the image, and achieving a blurring effect of the image through a weighted mean method, so as to reduce noise and make the image smoother.

3. The method for focus tracking and image matching in live cell imaging according to claim 2, wherein in S10, the calculating sharpness through a Laplacian algorithm comprises following specific steps:

    S13, performing second-order differential operations on the Gaussian-blurred image through a discrete form of a Laplacian operator, so as to highlight an edge and a texture in the image; and

    S14, calculating a score of the image through a mean value formula to evaluate the sharpness of the image.

4. The method for focus tracking and image matching in live cell imaging according to claim 1, wherein in S30, a Fourier transform function is used to calculate the phase correlation translation relationship between the two images along the X and Y axes.

5. The method for focus tracking and image matching in live cell imaging according to claim 4, wherein in S30, following the calculation with the Fourier transform function, the images undergo calculation through affine transformation for image registration and translation, obtaining deviation values of the X and Y axes, through which motion calibration and compensation are performed on the X and Y axes.

6. The method for focus tracking and image matching in live cell imaging according to any one of claims 1 to 5, further comprising fault tolerance processing steps:

    saving, when a sharp focus fails to be obtained or image matching fails at the selected observation point, an image of the observation point separately as a first error backup;

resetting the three XYZ axes of the live cell observation instrument to return to their initial state;
re-executing S00 to S40;
saving, when a sharp focus still fails to be obtained or image matching fails again, an image of the current observation point separately as a second error backup;
calculating the translation relationship between the two images of the first error backup and the second error backup for matching through the phase correlation algorithm; and
determining, if the two images are consistent, that there is an external physical change, and using the second error backup as the current field-of-view image in S30; and determining, if the two images are inconsistent, that hardware is abnormal, and stopping imaging.

7. The method for focus tracking and image matching in live cell imaging according to any one of claims 1 to 5, wherein in S00, the set step size is in a range of 5 to 10 minimum step sizes.

8. An apparatus for focus tracking and image matching in live cell imaging, comprising:

a control module, configured to move three XYZ axes of a live cell observation instrument to a selected cell observation point; and at a current position of the Z axis, first move the Z axis upward by a set step size and then downward by a set step size or first move the Z axis downward by a set step size and then upward by a set step size, and record a specific position of and a corresponding image at the Z axis after each moving step size, wherein each moving step size is one minimum step size representing minimum displacement or a minimum angle change achievable by an electric motor;
a focusing module, configured to perform Gaussian blur processing on each image, and calculate sharpness through a Laplacian algorithm; and use an image having the highest sharpness as a target point, and move the Z axis of the live cell observation instrument to the target point, wherein the target point corresponds to a focal plane having the highest sharpness on the Z axis;
a matching module, configured to collect a current field-of-view image and an image previously taken at the current observation point; and calculate a translation relationship between the two images through a phase correlation algorithm, so as to perform motion calibration and compensation on the X and Y axes of the live cell observation instrument; and
a fault tolerance processing module, configured to save, when a sharp focus fails to be obtained or image matching fails at the selected observation point, an image of the observation point separately as a first error backup; reset the three XYZ axes of the live cell observation instrument to return to their initial state; re-execute the operations of the control module, the focusing module, and the matching module; save, when a sharp focus still fails to be obtained or image matching fails again, an image of the current observation point separately as a second error backup; calculate the translation relationship between the two images of the first error backup and the second error backup for matching through the phase correlation algorithm; determine, if the two images are consistent, that there is an external physical change, and use the second error backup as the current field-of-view image of the matching module; and determine, if the two images are inconsistent, that hardware is abnormal, and stop imaging.

9. An electronic apparatus, comprising a memory and a processor, wherein the memory stores a computer program, and the processor is configured to run the computer program to execute the method for focus tracking and image matching in live cell imaging according to any one of claims 1 to 7.

10. A readable storage medium, storing a computer program, wherein the computer program comprises a program code used to control a process to execute the process, and the process comprises the method for focus tracking and image matching in live cell imaging according to any one of claims 1 to 7.

Perform Gaussian blur processing on each image, and calculate sharpness through a Laplacian algorithm

Use an image having the highest sharpness as a target point, and move a Z axis of a live cell observation instrument to the target point, where the target point corresponds to a focal plane having the highest sharpness on the Z axis

Collect a current field-of-view image and an image previously taken at a current observation point

Calculate a translation relationship between the two images through a phase correlation algorithm, so as to perform motion calibration and compensation on X and Y axes of the live cell observation instrument

FIG. 1

FIG. 2

## INTERNATIONAL SEARCH REPORT

| International application No. |
| --- |
| **PCT/CN2025/070336** |

| A. | CLASSIFICATION OF SUBJECT MATTER |
| --- | --- |

G06T 7/246(2017.01)i; G06F 11/14(2006.01)n; G06T 5/70(2024.01)n; G06T 7/262(2017.01)n; G06T 7/32(2017.01)n; G06V 10/75(2022.01)n

According to International Patent Classification (IPC) or to both national classification and IPC

| B. | FIELDS SEARCHED |
| --- | --- |

Minimum documentation searched (classification system followed by classification symbols)

IPC: G06T G06F G06V

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 焦点, 对焦, 焦平面, 步距, 清晰度, 相位相关, 平移, 匹配, 校准, 补偿, 容错, 备份, 高斯模糊, 拉普拉斯, focus, focal plane, step, definition, phase correlation, translation, matching, calibration, compensation, fault tolerant, backup, gaussian blur, lapras

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118115542 A (SHENZHEN SHENGQIANG TECHNOLOGY CO., LTD.) 31 May 2024 (2024-05-31) <br> claims 1-10, and description, paragraphs [0005]-[0082] | 1-10 |
| Y | CN 114785953 A (GUANGDONG UNIVERSITY OF TECHNOLOGY) 22 July 2022 (2022-07-22) <br> description, paragraphs [0009]-[0028] | 1-5, 7, 9, 10 |
| Y | CN 117452617 A (SHANGHAI LICHUANG TECHNOLOGY CO., LTD.) 26 January 2024 (2024-01-26) <br> description, paragraphs [0005]-[0036] | 1-5, 7, 9, 10 |
| Y | CN 104917931 A (BOE TECHNOLOGY GROUP CO., LTD.) 16 September 2015 (2015-09-16) <br> description, paragraphs [0005]-[0044] | 1-5, 7, 9, 10 |
| A | CN 114785953 A (GUANGDONG UNIVERSITY OF TECHNOLOGY) 22 July 2022 (2022-07-22) <br> description, paragraphs [0009]-[0028] | 6, 8 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 February 2025** | **26 February 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2025/070336** |

### C. DOCUMENTS CONSIDERED TO BE RELEVANT

| Category* | Citation of document, with indication, where appropriate, of the relevant passages | Relevant to claim No. |
|---|---|---|
| A | CN 117452617 A (SHANGHAI LICHUANG TECHNOLOGY CO., LTD.) 26 January 2024 (2024-01-26)<br>description, paragraphs [0005]-[0036] | 6, 8 |
| A | CN 104917931 A (BOE TECHNOLOGY GROUP CO., LTD.) 16 September 2015 (2015-09-16)<br>description, paragraphs [0005]-[0044] | 6, 8 |
| A | CN 114577799 A (HANGZHOU DIAN BIOTECHNOLOGY CO., LTD.) 03 June 2022 (2022-06-03)<br>entire document | 1-10 |

Form PCT/ISA/210 (second sheet) (July 2022)

**INTERNATIONAL SEARCH REPORT**
Information on patent family members

International application No.

**PCT/CN2025/070336**

| Patent document cited in search report | | | Publication date (day/month/year) | Patent family member(s) | | | Publication date (day/month/year) |
|---|---|---|---|---|---|---|---|
| CN | 118115542 | A | 31 May 2024 | CN | 118115542 | B | 12 July 2024 |
| CN | 114785953 | A | 22 July 2022 | CN | 114785953 | B | 26 May 2023 |
| CN | 117452617 | A | 26 January 2024 | None | | | |
| CN | 104917931 | A | 16 September 2015 | US | 2017308998 | A1 | 26 October 2017 |
| | | | | US | 9959600 | B2 | 01 May 2018 |
| | | | | WO | 2016188010 | A1 | 01 December 2016 |
| | | | | CN | 104917931 | B | 02 March 2018 |
| CN | 114577799 | A | 03 June 2022 | None | | | |

Form PCT/ISA/210 (patent family annex) (July 2022)